Europäisches Patentamt

(19) European Patent Office

Office européen des brevets

(11) Publication number: **0 007 427**
B1

(12) **EUROPEAN PATENT SPECIFICATION**

(45) Date of publication of patent specification: **19.05.82**   (51) Int. Cl.³: **G 01 N 11/14**

(21) Application number: **79101982.1**

(22) Date of filing: **16.06.79**

(54) Viscometer.

(30) Priority: **21.06.78 US 917470**

(43) Date of publication of application:
**06.02.80 Bulletin 80/3**

(45) Publication of the grant of the patent:
**19.05.82 Bulletin 82/20**

(84) Designated Contracting States:
**AT BE CH DE FR GB IT LU NL SE**

(56) References cited:
**DE - A - 1 498 820**
**DE - A - 2 644 100**
**US - A - 2 817 231**
**US - A - 2 821 860**
**US - A - 2 957 339**

(73) Proprietor: **Brookfield, David A.**
**c/o HASELTINE, LAKE & WATERS 122 East 42nd**
**Street**
**New York, New York 10017 (US)**

(72) Inventor: **Brookfield, David A.**
**c/o HASELTINE, LAKE & WATERS 122 East 42nd**
**Street**
**New York, New York 10017 (US)**

(74) Representative: **Fisher, Bernard et al,**
**Raworth, Moss & Cook 36 Sydenham Road**
**Croydon Surrey CRO 2EF (GB)**

Courier Press, Leamington Spa, England.

## Viscometer

This invention relates to a viscometer of the type having concentric open ended cylindrical elements, one of which is positioned within the other. The open ended cylindrical elements are positioned within a chamber containing a mass of liquid the viscosity of which is to be monitored. One of the cylindrical elements is provided with a drive to provide a frictional drag effect between the cylindrical elements due to the frictional drag of the liquid in the space between the cylindrical elements in response to the turning movement of the driving cylinder. Such a viscometer requires a torsion unit positioned within the medium to support the inner cylinder, the torsion unit including a first part or hub and a second part which is connected to the inner cylindrical element. A metal tube provides the axial support of the second part, the tube having its ends sealed to both parts. A readout element is located within the tube and has one end anchored to turn with the inner cylindrical element, the other end of the readout element being operatively connected to a readout device external of the chamber to provide wanted information of the extent of angular displacement of the inner cylindrical member about its longitudinal axis. The above described type of viscometer well illustrates the necessity of ensuring lateral stability of the inner cylindrical element as well as torsional resistance against angular displacement of that cylindrical element.

The metal tube presents a problem in such viscometers when the torque applied thereto exceeds a predetermined value, at which the lateral deflection of said second part, or the readout element, or both, can occur and cause inaccurate readout information. The metal tube, in addition to protecting and sealing the readout element from the liquid, also has to provide for both the lateral stability for the inner cylindrical element and torsional resistance against angular displacement of the inner cylindrical element about its longitudinal axis.

As a consequence, the tubes, prior to the present invention, have been of a relatively large diameter and thick walled stock and hence of such stiffness that the sensitivity of such torsion devices has been seriously limited.

A typical example of such known viscosity meters is disclosed in United States Patent 2,817,231, in which the said supporting tube is anchored at its respective ends to a fixed body of the device and to the driven cylindrical element thereof. Similar constructions are disclosed in German published application 2644100 and in U.S. Patent 2,821,860 in environments other than that of a viscosity meter.

It is an object of the present invention to provide a viscosity meter of the type described, which has a greater sensitivity than that of such known viscometers, in which the supporting tube contributes as little as is practical to the torsional resistance of the torsion unit and resilient members associated with the tube provide as much as is practical of the torsional resistance of the torsion unit while still ensuring lateral stability.

According to the present invention, there is provided a viscometer including a chamber, first and second concentric open-ended cylindrical elements within the chamber, one of the cylindrical elements being positioned within the other with a clearance appropriate for the flow of liquid between the respective cylindrical elements, means including a shaft member rotatably entrant of said chamber and connected axially to one of said cylindrical elements to rotate the connected cylindrical element relative to the other cylindrical element, and a torque resistant and responsive device supporting the inner cylindrical element in spaced relationship with the outer cylindrical element, and which includes a hub having an axial passage extending therethrough, a part connected to said inner cylindrical element, a tube sealed axially to said part and to said hub and a readout rod within said tube with one end anchored to said part and the other end extending freely through the tube and the passage of the hub, characterised in that the inside diameter of said tube is such that the readout rod is a close but free fit therein and the outside diameter of the tube is such that the tube contributes as little as is practical to the torsional resistance of the device but establishes a wall that is not deformable against the readout rod by fluid pressure, resilient members connect said part to said hub and provide as much as is practical of the torsional resistance of the device and a readout device is positioned externally of the chamber and includes a rotor fixed on the exposed end of the readout rod, a stator surrounding said rotor and fixed on a supporting portion, and a bearing located close to the centre of gravity of the rotor and which supports the readout rod at a position immediately adjacent the rotor.

The inventin will now be described with reference to the accompanying drawings which illustrate the invention, and in which:—

Fig. 1 is a side view of a torsion unit in accordance with one embodiment of the invention;

Fig. 2 is a section, of increased scale, taken approximately along the indicated line 2—2 of Figure 1;

Fig. 3 is a section, of a further increased scale, taken approximately along the indicated line 3—3 of Figure 2;

Fig. 4 is a section taken vertically through a viscometer in which the readout rod of the torsion unit extends axially through the shaft by which the drive cylinder is rotated;

Fig. 5 is a vertical section through a viscometer in which the drive shaft and the readout rod extend through opposite ends of the viscometer housing; and

Fig. 6 is a vertical section through a viscometer similar to that shown in Figure 5, in which the motor is sealed within a chamber and thus isolated from the medium being monitored.

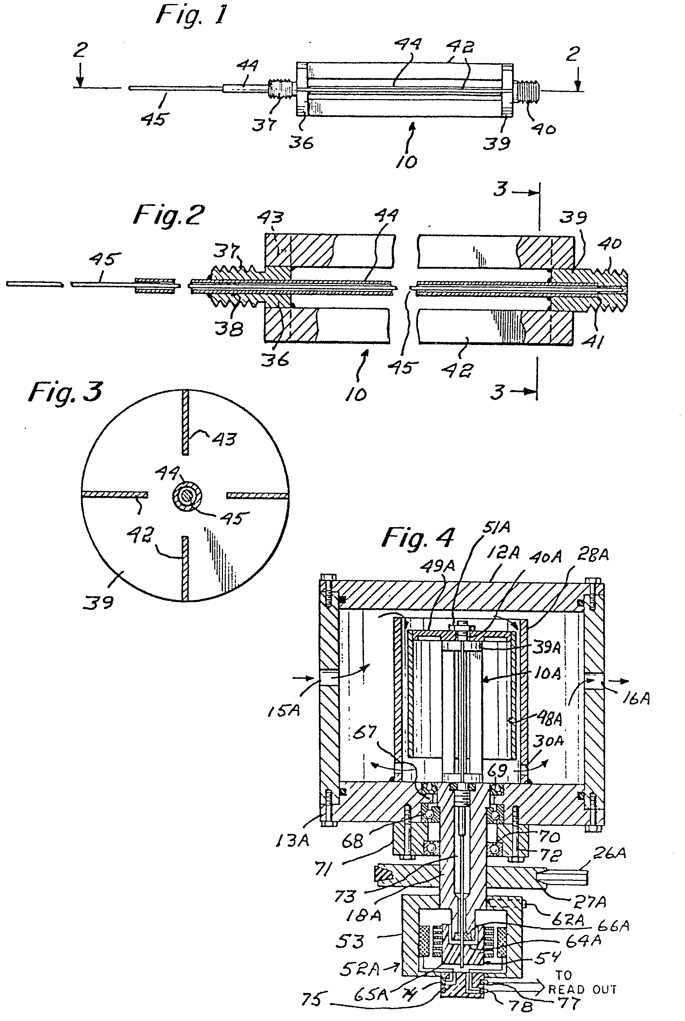

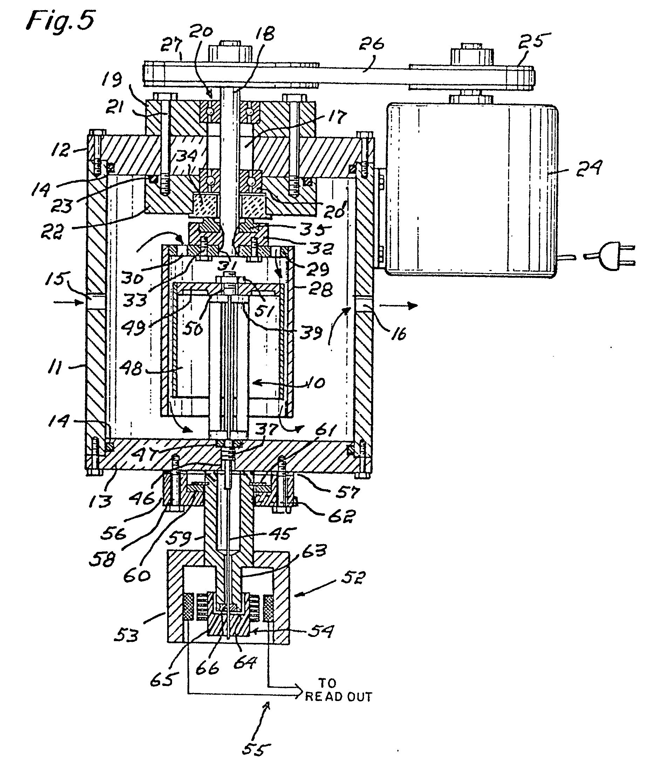

Reference is first made to Figure 5 which illustrates a viscometer incorporating a torsion unit in accordance with the invention. The viscometer is of the type previously generally described and the torsion unit is indicated at 10 and is shown by itself in Figures 1—3.

The viscometer housing consists of a cylindrical side wall 11, and shouldered end walls 12 and 13 fitted and secured to the side wall and carrying seals 14. The side wall 11 has diametrically opposed inlet and outlet ports 15 and 16, respectively, enabling the viscometer to be placed in a conduit (not shown) for a fluid, the viscosity of which is to be monitored.

The end wall 12 has a port 17 freely receiving a shaft 18. An end cap 19 provided with a shaft-supporting ball bearing unit 20 is secured to the end wall 12 by screws 21. A ring 22, within the housing and provided with a seal 23, is also secured by screws 21. The end wall 12 and the ring 22 carry a second shaft-supporting, ball bearing unit 20'. A motor 24 mounted on the side wall 11 has a pulley 25 on its drive shaft with a belt 26 trained about it and a pulley 27 fast on the outer end of the shaft 18.

A first or drive cylinder 28, open at one end, has its end wall 29 provided with inlet ports 30 and an axial bore 31 in which the end of the shaft 18 is fitted, the cylinder being secured to the shaft flange 32 by screws 33. A shaft seal includes a static portion 34 carried by the ring 22, which is engaged by an annular seal 35 carried by the flange 32.

The torsion unit 10, best seen in Figures 1—3, includes a first part comprised of a hub 36 provided with a threaded shank 37 and having an axial passage 38, and a second part 39 having a threaded shank 40 and a counterbored axial passage 41 extending therethrough. The two parts 36 and 39 are shown as interconnected by four resilient metal strips 42 having their ends anchored in radial slots 43 spaced 90° apart.

A tube 44, in the disclosed embodiment a metal tube, has its inner end within the counterbore of the passage 41 and is sealed as by welding it to the part 39. The outer end of the tube 44 extends through the passage 38 and is sealed as by welding it to the outer end of the shank 37. A readout rod 45, of small diameter and a close but free fit within the tube 44, has one end soldered in and closing the passage 41 and its other end extending beyond the outer end of the tube 40 and outside the housing.

The end wall 13 has a port 46 into which the shank 37 of the first part 36 is threaded, the port having a seat at its inner end for a seal 47.

A second cylinder 48, a driven cylinder, open at one end, is a close but free fit within the drive cylinder 28 to provide an annular clearance in the approximate range of 0.794 mm to 12.7 mm, by way of example and not of limitation, 3.175 mm clearance being the most common. The end wall 49 of the cylinder 48 is provided with an axial bore 50 in which the shank 40 of the second part fits, and the end wall 49 is secured to the second part 39 by a nut 51 threaded on the exposed threaded end of the shank 40.

With the viscometer in use and the motor 24 in operation the liquid flowing between the two cylinders exerts a rotative force on the driven cylinder 48 that increases with the viscosity of the liquid. This force is opposed to a predetermined extent by the torsion unit 10, which also provides lateral stability so as to maintain at all times the driven cylinder 48 concentric with the drive cylinder 28. It will be appreciated that the radially disposed strips 42 ensure lateral stability, while their thickness is such that they are resiliently flexible and thus provide torsional resistance.

It will also be appreciated that the dimensions of the tube 44 are important. The tube 44 contributes towards the torsional resistance of the unit 10, and additionally its small size enables it to be relatively thin walled and still not collapse against the readout element 45 as the fluid pressure to which it is subjected may be as high, for example, as 35.15 kg/cm$^2$ with the usual pressure range in the approximate range of 7.03 to 10.546 kg/cm$^2$.

The readout means to which the readout rod 45 is operatively connected may be of any type. In the disclosed embodiments, a magnetic transducer is generally indicated at 52, and for convenience, is shown schematically as containing a coil holding part 53 surrounding a rotor 54 fast on the outer end of the readout rod 45. The coil circuit is indicated at 55.

Because the diameter of the readout rod is small, for example, 1.575 mm, the rod is relatively flexible. To prevent that characteristic from being a cause of inaccurate readout information, it is necessary to ensure lateral stability of the rotor 54. To that end, a ring 56 and a seal 57 are secured to the outer surface of the end wall 13 by screws 58. A hollow post 59 is a close fit in the ring 56, and it and a spring washer 60 are held in place by a retainer 61, thus seating the post 59 against the wall 13 while permitting it to be turned when a set screw 62 is released.

The outer end 63 of the post 59 is of reduced diameter and extends into a recess 64 in a magnet holder 65 of the rotor 54. The coil holding part 53 is secured to the post 59 adjacent the shoulder defined by said outer end 63. The readout rod 45 is held by a bearing 66 at the outer end of the passage through the post with its longitudinal axis substantially at the center of gravity of the rotor 54 thus ensuring the essential lateral stability of the rod. As the coil holding part 53 may be turned relatively to the rotor 54 when the set screw 62 is released, a zero reading of the transducer 52 may be easily and accurately set.

From the foregoing, it will be apparent that the viscometer just described ensures increased sensitivity, the tube 44 protecting the readout rod 45 contributing as little of the total torsional resistance as is practicable. The metal strips 42 provide the necessary lateral stability, and, as much of the torsional resistance as is practical.

By way of example, the tube 44 may be stainless steel tubing having an outside diameter of or in the neighborhood of 2.083 mm and a wall thickness of or in the neighborhood of 0.127 mm.

A viscometer in accordance with another embodiment of the invention is illustrated by Figure 4. As many of the parts utilized in that embodiment are or may be the same as those of the viscometer of Figure 5, corresponding parts are not described and are identified by the suffix addition A to the appropriate reference numerals.

In Figure 4, the outer, open-ended cylinder 28A is fixed on the inner surface of the end wall 13A with diametrically opposed ports 30A adjacent thereto and the inner open-ended cylinder 48A is supported by a torsion unit 10A with its end wall 49A clamped to the part 39A by the nut 51A threaded on its shank 40A. The shaft 18A, however, extends freely through a port 67 in the housing end wall 13A and is supported by a ball bearing unit 68 fixed in the outer end of the port 67, the inner end of which carries a shaft seal 69. A second ball bearing unit 70 is carried by a ring 71 secured to the outer surface of the wall 13A by screws 72. The shaft 18A has an axial bore 73 in which the shank 37A of the first part 36A of the torsion unit 10A is threaded and which is provided with a seal 47A.

The readout rod 45A extends freely through the bore 73 and the readout includes a unit 52A the coil containing part 53A which is fixed on the outer end of the shaft 18A as by the set screw 62A and surrounds the rotor 54A fixed on the readout element 45A. The circuit 55A to the coil 53A includes slip rings 74 and 75 carried by an axial insulator 76 and engaged by brushes indicated at 77 and 78, respectively.

In this embodiment of the invention, the part 39A of the unit 10A is free to turn, subject to the torsional resistance the unit 10A provides relative to the part 37A which turns with the shaft 18A, rotation of the part 39A opposed by the liquid between the rotating cylinder 48A and the fixed cylinder 28A. The readout provides information on the turning of the cylinder 48A relative to the first part 36A of the torsion unit 10A which rotates with the shaft 18A.

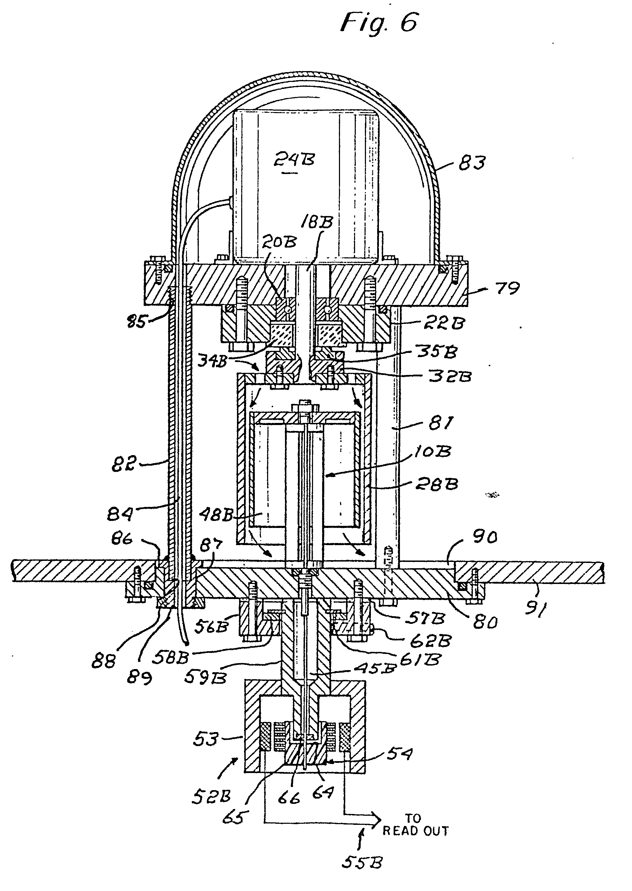

Figure 6 illustrates yet another viscometer in accordance with the invention and as many of the parts are or may be identical to those of the viscometer illustrated by Figures 4 and 5, corresponding parts are identified by the appropriate reference numerals distinguished by the suffix addition B.

The viscometer illustrated by Figure 6 has a support 79 and an end wall 80 corresponding, respectively to the end walls 12 and 13 of the housing shown in Figure 5 but interconnected by three posts, two posts 81, only one of which is shown in the drawing, and a tubular post 82. The drive for the shaft 18B is shown as a motor 24B connected directly thereto and mounted on the support 79 and within a casing 83 sealed thereto. A cord 84, the leads of which are connected to the motor 24B extends through the tubular post 82 which is threaded and sealed in the counterbore of a passage 85 extending through the support 79 and through and sealed to a coupling 86 which is sealed to the post 82 and in the counterbored end of a passage 87 extending through the end wall 80 with a nut 88 threaded on its shank 89. The viscometer of Figure 6 is for use where it is to be inserted through a port 90 in a chamber wall 91, the wall of a reactor, for example, and secured and sealed thereto.

## Claims

1. A viscometer including a chamber, first and second concentric open-ended cylindrical elements (48, 28) within the chamber, one of the cylindrical elements being positioned within the other with a clearance appropriate for the flow of liquid between the respective cylindrical elements, means including a shaft member (18) rotatably entrant of said chamber and connected axially to one of said cylindrical elements to rotate the connected cylindrical element relative to the other cylindrical element, and a torque resistant and responsive device (10) supporting the inner cylindrical element (48) in spaced relationship with the outer cylindrical element (28), and which includes a hub (36) having an axial passage (38) extending therethrough, a part (39) connected to said inner cylindrical element (48), a tube (44) sealed axially to said part (39) and to said hub (36), and a readout rod (45) within said tube (44) with one end anchored to said part (39) and the other end extending freely through the tube and the passage (38) of the hub (36), characterised in that the inside diameter of said tube (44) is such that the readout rod (45) is a close but free fit therein and the outside diameter of the tube (44) is such that the tube contributes as little as is practical to the torsional resistance of the device (10) but establishes a wall that is not deformable against the readout rod by fluid pressure, resilient members (42) connect said part (39) to said hub (36) and provide as much as is practical of the torsional resistance of the device (10), and a readout device (52) is positioned externally of the chamber and includes a rotor (65) fixed on the exposed end of the readout rod (45), a stator (53) surrounding said rotor and fixed on a supporting portion (59), and a bearing (66) located close to the centre of gravity of the rotor (65) and which supports the readout rod (45) at a position immediately adjacent the rotor (65).

2. The viscometer of Claim 1, characterised in that the part (39) connected to the inner cylindrical element (48) has a threaded shank (40) and the inner cylindrical element (48) has an axial bore (50) in which said shank (40) fits.

3. The viscometer of Claim 1 or 2, characterised in that the torque responsive device (10) is supported in a threaded port (46) in a wall member (13) of the chamber.

4. The viscometer of Claim 1 or 2, characterised in that the torque responsive device (10) is supported in a bore (73) in the shaft member (18A).

5. The viscometer of Claim 1, characterised in that the stator (53) of the readout device (52) is rotatably held by a supporting portion (56), and releasable means (62) lock said stator thereto.

6. The viscometer of Claim 4, characterised in that the torque responsive device (10) is supported in an end section of the shaft member (18A).

7. The viscometer of Claim 3, characterised in that the supporting portion is a post (59) connected to the wall member.

8. The viscometer of Claim 1, characterised in that the rotor (65) has an axial socket (64) dimensioned to receive the outer end of the supporting portion and said bearing within it.

9. The viscometer of Claim 1, characterised in that the supporting portion (59) includes a ring (56) fixed to the outer surface of the wall member (13), a post (59) rotatably held by the fixed ring, and means (62) releasably locking the post to said ring thereby providing means enabling the stator to be turned into and set in a predetermined zero position.

10. The viscometer of claim 9, characterized in that the fixed ring (56) includes an annular flange having a central port in which the post (59) is a close but free fit, a spring washer (60) is seated against the inner surface of the flange, and a keeper (61) carried by the post is resiliently engaged by the washer and yieldably maintains the post seated against said wall member.

**Patentansprüche**

1. Viskosimeter mit einer Kammer, mit einem ersten und einem zweiten konzentrischen, oben offenen, zylindrischen Element (48, 28) innerhalb der Kammer, wobei das eine zylindrische Element in dem anderen mit einem solchen Spiel angeordnet ist, daß im Zwischenraum zwischen den Elementen ein Flüssigkeitsstrom erfolgen kann, mit Mitteln, die ein Achselement (18) enthalten, das drehbar in die Kammer hineinragt und axial mit einem der zylindrischen Elemente verbunden ist, um dieses relativ zu dem anderen zylindrischen Element zu drehen, und mit einer gegen Torsion widerstandsfähigen und darauf ansprechenden Vorrichtung (10), die das innere zylindrische Element (48) im Abstand zum äußeren zylindrischen Element (28) hält, und die eine Nabe (36) mit einem axialen Durchlaß (38), ein mit dem inneren zylindrischen Element (48) verbundenes Teil (39), eine axial mit dem Teil (39) und der Nabe (36) versiegelte Röhre (44), und eine Ablesestange (45) innerhalb der Röhre (44) enthält, deren eines Ende mit dem Teil (39) verankert ist, und deren anderes Ende frei durch die Röhre (44) und den Durchlaß (38) der Nabe verläuft, dadurch gekennzeichnet, daß der Innendurchmesser der Röhre (44) so bemessen ist, daß die Ablesestange (45) eng aber frei darin sitzt, und daß der Außendurchmesser der Röhre (44) so bemessen ist, daß er so wenig wie praktisch möglich zum Torsionswiderstand der Vorrichtung (10) beiträgt, aber eine Wand bildet, die nicht durch den Flüssigkeitsdruck gegen die Ablesestange deformierbar ist, daß nachgiebige Elemente (42) das Teil (39) mit der Nabe (36) verbinden und so viel Torsionswiderstand der Vorrichtung (10) wie praktisch möglich besorgen, und daß außerhalb der Kammer eine Ablesevorrichtung (52) angeordnet ist, die einen am freiliegenden Ende der Ablesestange (45) befestigten Rotor (65), einen den Rotor umgebenden und an einem stützenden Teil (59) befestigten Stator (53) und ein Lager (66) enthält, das nahe dem Schwerpunkt des Rotors (65) angeordnet ist und die Ablesestange (45) an einer unmittelbar neben dem Rotor (65) liegenden Stelle stützt.

2. Viskosimeter nach Anspruch 1, dadurch gekennzeichnet, daß das mit dem inneren zylindrischen Element (48) verbundene Teil (39) einen mit Gewinde versehenen Schaft (40) aufweist, und daß das innere zylindrische Element (48) eine axiale Bohrung (50) besitzt, in die der Schaft (40) paßt.

3. Viskosimeter nach Anspruch 1 oder 2, dadurch gekennzeichnet, daß die auf Torsion ansprechende Vorrichtung (10) in einem mit Gewinde versehenen Durchlaß (46) in einem Wandelement (13) der Kammer gelagert ist.

4. Viskosimeter nach Anspruch 1 oder 2, dadurch gekennzeichnet, daß die auf Torsion ansprechende Vorrichtung (10) in einer Bohrung (73) des Schaftelementes (18A) gelagert ist.

5. Viskosimeter nach Anspruch 1, dadurch gekennzeichnet, daß der Stator (53) der Ablesevorrichtung (52) drehbar in einem Lagerteil (56) gehalten ist, und daß lösbare Mittel (62) vorgesehen sind, um an diesem den Stator zu arretieren.

6. Viskosimeter nach Anspruch 4, dadurch gekennzeichnet, daß die auf Torsion ansprechende Vorrichtung (10) in einem Endabschnitt des Schaftelementes (18A) gelagert ist.

7. Viskosimeter nach Anspruch 3, dadurch gekennzeichnet, daß das stützende Teil (59) aus einer mit dem Wandelement verbundenen Säule besteht.

8. Viskosimeter nach Anspruch 1, dadurch gekennzeichnet, daß der Rotor (65) eine so bemessene axiale Buchse (64) aufweist, daß diese das äußere Ende des stützenden Teils und das Lager in sich aufnimmt.

9. Viskosimeter nach Anspruch 1, dadurch gekennzeichnet, daß das stützende Teil (59) einen an der Außenfläche des Wandelementes (13) befestigten Ring (56), eine drehbar auf dem Ring gelagerte Säule (59) und Mittel (62) enthält, die die Säule lösbar an dem Ring arretieren, so daß dadurch Mittel vorgesehen werden, durch die der Stator in eine vorgegebene Null-Stellung drehbar ist.

10. Viskosimeter nach Anspruch 9, dadurch gekennzeichnet, daß der feste Ringe (56) einen ringförmigen Flansch mit einem mittleren Durchlaß aufweist, in dem die Säule (59) eng aber frei sitzt, daß eine Federscheibe (60) an der Innenfläche des Flansches anliegt, und daß ein von der Säule (59) getragener Anker (61) elastisch mit der Federscheibe in Eingriff ist und den nachgiebigen Sitz der Säule am Wandelement aufrechterhält.

**Revendications**

1. Un viscosimètre comportant une chambre, des premier et second éléments concentriques (48, 28) à extrémité ouverte disposés à l'intérieur de la chambre, l'un des éléments cylindriques étant positionné à l'intérieur de l'autre avec un jeu approprié pour permettre l'écoulement de liquide entre les éléments cylindriques respectifs, des moyens comprenant un organe formant arbre (18) pénétrant de manière rotative dans ladite chambre et raccordé axialement à l'un desdits éléments cylindriques pour faire tourner l'élément cylindrique raccordé par rapport à l'autre élément cylindrique, et un dispositif (10) sensible et résistant à la torsion supportant l'élément cylindrique intérieur (48) dans une disposition espacée par rapport à l'élément cylindrique extérieur (28) et qui comporte un moyeu (36) comportant un passage axial qui le traverse, une partie (39) raccordée audit élément cylindrique intérieur (48), un tube (44) fixé axialement de manière étanche à ladite partie (39) et audit moyeu (36) et une tige de lecture (45) disposée à l'intérieur dudit tube (44), tige dont une extrémité est ancrée à ladite partie (39) et dont l'autre extrémité s'étend librement dans le tube et le passage (38) du moyeu (36), caractérisé en ce que le diamètre intérieur dudit tube (44) est tel que la tige de lecture y est montée avec un ajustage étroit mais libre et le diamètre extérieur du tube (44) est tel que le tube contribue aussi peu qu'il est possible en pratique à la résistance à la torsion du dispositif (10) mais forme une paroi qui n'est pas déformable jusqu'à venir en appui contre la tige de lecture par la pression de fluide, des organes élastiques (42) raccordent ladite partie (39) audit moyeu (36) et fournissent autant qu'il est possible en pratique de la résistance à la torsion du dispositif (10) et un dispositif de lecture (52) est disposé à l'extérieur de la chambre et comporte un rotor (65) fixé sur l'extrémité exposée de la tige de lecture (45), un stator (53) entourant ledit rotor et fixé à une partie support (59), et un palier disposé proche du centre de gravité du rotor (65) et qui supporte la tige de lecture (45) en un emplacement immédiatement adjacent au rotor (65).

2. Le viscosimètre de la revendication 1, caractérisé en ce que la partie (39) raccordée à l'élément cylindrique intérieur (48) a une queue filetée (40) et l'élément cylindrique intérieur (48) comporte un alésage axial (50) dans lequel s'adapte ladite queue (40).

3. Le viscosimètre de la revendication 1 ou 2, caractérisé en ce que le dispositif (10) sensible à la torsion est porté dans un orifice fileté (46) formé dans un élément de paroi (13) de la chambre.

4. Le viscosimètre de la revendication 1 ou 2, caractérisé en ce que le dispositif (10) sensible à la torsion est porté dans un alésage (73) de l'organe formant arbre (18A).

5. Le viscosimètre de la revendication 1, caractérisé en ce que le stator (53) du dispositif de lecture (52) est porté à rotation par une partie support (56), et des moyens déverrouillables (62) solidarisent ledit stator avec cette partie.

6. Le viscosimètre de la revendication 4, caractérisé en ce que le dispositif (10) sensible à la torsion est porté dans une partie d'extrémité de l'organe formant arbre (18A).

7. Le viscosimètre de la revendication 3, caractérisé en ce que la partie support est une colonnette (59) raccordée à l'élément de paroi.

8. Le viscosimètre de la revendication 1, caractérisé en ce que le rotor (65) comporte un alvéole axial (64) dimensionné pour recevoir intérieurement l'extrémité extérieure de la partie support et ledit palier.

9. Le viscosimètre de la revendication 1, caractérisé en ce que la partie support (59) comporte un anneau (56) fixé à la surface extérieure de l'élément de paroi (13), une colonnette (59) portée à rotation par l'anneau fixe et des moyens (62) solidarisant de manière déverrouillable la colonnette dudit anneau, fournissant ainsi des moyens permettant au stator d'être déplacé en rotation et d'être réglé dans une position de zéro prédéterminée.

10. Le viscosimètre de la revendication 9, caractérisé en ce que l'anneau fixe (56) comporte une collerette annulaire ayant un orifice central dans lequel la colonnette (59) est montée avec un ajustage étroit mais libre, une rondelle élastique (60) est en appui contre la surface intérieure de la collerette et la rondelle est élastiquement en appui contre un organe de retenue (61) porté par la colonnette et qui maintient la colonnette élastiquement en appui contre ledit élément de paroi.

0 007 427

Fig. 1

Fig. 2

Fig. 3

Fig. 4

**Fig. 5**

TO
READ OUT

# Fig. 6